# FASCICULE DE BREVET EUROPEEN

(11) **EP 1 806 573 B1**
(45) Date de publication et mention de la délivrance du brevet: **29.04.2009**
(21) Numéro de dépôt: 06127277.9
(22) Date de dépôt: 28.12.2006
(51) Int. Cl.: G01N 19/02

(54) **Dispositif et procédé permettant la mesure de phénomènes tribologiques**
Vorrichtung und Verfahren zur Messung tribologischer Phänomene
Device and process allowing the measurement of tribological phenomena

(30) Priorité: 06.01.2006 FR 0650054
(43) Date de publication de la demande: 11.07.2007
(73) Titulaire: LABORATOIRE CENTRAL DES PONTS ET CHAUSSEES, 75015 Paris (FR)
(72) Inventeur: Stefani, Christian, 75116 PARIS (FR); Hammoum, Ferhat, 44800 SAINT-HERBLAIN (FR); Merliot, Erick, 78650 BEYNES (FR); Cottineau, Louis-Marie, 44830 BOUAYE (FR)
(74) Mandataire: Dronne, Guy

(56) Documents cités:
- EP-A- 0 564 986
- FR-A1- 2 325 924
- US-A- 5 259 236
- US-A- 5 736 630
- US-A- 5 992 212

## Description

L'invention concerne un dispositif d'obtention de la dégradation d'un premier matériau en contact avec un second matériau et un procédé pour provoquer une telle dégradation dans une zone de contact.

De tels dispositifs permettent de générer des frottements sous l'action de contact d'un premier matériau avec un second matériau. Les dispositifs sont destinés à la mesure des phénomènes tribologiques, comprenant à la fois les phénomènes mécaniques et les phénomènes thermiques qui se produisent entre deux corps en mouvement frottant l'un contre l'autre.

On connaît de tels dispositifs, en particulier des tribomètres, comme par exemple comme celui décrit dans FR 2 660 756 qui permet de mettre en charge une pièce fixe sur une pièce mobile en contact ponctuel, linéaire ou surfacique en présence d'un lubrifiant.

Cependant, ce type de tribomètre ne permet pas d'appliquer des contraintes tangentielles quasi-statiques entre la pièce fixe et la pièce mobile. En effet, la pièce mobile est animée d'un mouvement généralement rectiligne ou circulaire, de sorte que la pièce mobile vient de manière répétée en contact dynamique avec la pièce fixe.

Les documents FR 2 325 924, EP 564 986, US 5 736 630, US 5 259 236 et US 5 992 212 décrivent différents dispositifs pour déplacer un premier matériau par rapport à un deuxième matériau afin de déterminer différentes caractéristiques de frottement entre ces deux matériaux. Ils ne décrivent pas des dispositifs permettant de tester la dégradation d'un premier matériau en contact avec un deuxième matériau.

Un premier objet de la présente invention est de fournir un dispositif qui permet de mesurer les phénomènes tribologiques existant entre un premier et un second matériau soumis à un effort quasi-statique, en particulier en étant soumis à des contraintes tangentielles.

Comme décrit plus en détails par la suite, pour pouvoir caractériser le comportement tribologique de certains matériaux soumis à certaines conditions environnementales, il est important de pouvoir leur appliquer une charge à composante tangentielle.

Le dispositif de la présente invention se caractérise par le fait qu'il comporte des premiers moyens formant support pour un premier matériau ayant une pluralité de portions successives et des seconds moyens formant support pour un second matériau ayant une pluralité de portions successives, lesdites portions du premier matériau étant aptes à venir en contact quasi-statique avec lesdites portions du second matériau dans des zones de contact successives, comportant un patin incurvé recouvert au moins en partie dudit second matériau, et
par le fait qu'il comporte des moyens de chargement des seconds moyens formant support, qui autorisent un déplacement des seconds moyens formant support en fonction de la dégradation du premier matériau d'une première zone de contact vers une deuxième zone de contact adjacente, la forme du patin permettant que la résultante des forces appliquées par le patin au premier matériau (14) fasse un angle (α) sensiblement constant avec ledit premier matériau (14) dans chacune des zones de contact (20). On comprend que le dispositif permet d'appliquer successivement un effort de manière quasi-statique dans chacune de ces zones de contact.

Tant que la première zone de contact n'est pas endommagée, une première portion du second matériau reste en contact, sans déplacement significatif, dans cette première zone de contact, avec une première portion du premier matériau.

Dès que le premier matériau s'endommage, les seconds moyens formant support glissent jusqu'à retrouver une deuxième zone de contact « vierge », c'est-à-dire non endommagée. Dans cette deuxième zone de contact, la résultante des forces appliquées par le second matériau au premier matériau fait alors à nouveau un angle sensiblement constant avec ledit premier matériau.

Il en va ainsi de suite, de zones de contact en zones de contact successives, jusqu'à ce que les seconds moyens formant support arrivent en fin de déplacement et/ou que la pluralité de portions successives du second matériau aient été en contact successivement avec la pluralité de portions successives du premier matériau.

Ainsi, les forces verticales et horizontales appliquées dans la zone de contact peuvent varier en phase de manière cyclique dans un rapport constant et sans changement de signe. La sollicitation est ainsi unidirectionnelle et les contraintes appliquées dans la zone de contact ont une composante tangentielle.

En outre, le dispositif selon l'invention permet de conserver un angle sensiblement constant quelle que soit la position du patin et quel que soit l'état de dégradation des matériaux.

On comprend que les seconds moyens formant support se déplacent successivement d'une zone de contact à la zone de contact suivante, préférentiellement selon une direction unique de déplacement, de sorte que les débris éventuellement accumulés pendant la dégradation d'une première zone de contact sont naturellement chassés dès que les seconds moyens formant support se trouvent dans la deuxième zone de contact, évitant ainsi la formation d'un troisième corps.

Par ailleurs, on comprend que selon la nature des matériaux en présence, l'effort appliqué est plus ou moins quasi-statique ; en effet, on comprend que si les matériaux autorisent une légère déformation, il en résulte une oscillation dans la zone de contact.

De plus, la forme incurvée du patin permet en outre de faciliter l'évacuation des débris éventuellement générés par le frottement entre le premier et le second matériau. En effet, on comprend que si la zone de contact se déplace vers la droite par exemple, les débris accumulés sont chassés vers la gauche.

Il est préférable que le rapport des forces verticales et horizontales soit indépendant du point de contact entre les deux matériaux, ce qui conduit à choisir préférentiellement un patin qui présente une surface cylindrique dont au moins une partie des génératrices s'appuie sur une spirale logarithmique.

Un second objet de la présente l'invention est de fournir un procédé qui permet d'appliquer un effort quasi-statique entre un premier et un second matériau, en particulier à l'aide de contraintes tangentielles.

Le procédé selon l'invention se caractérise par les étapes suivantes :
- on fournit un premier matériau ayant une pluralité de portions successives et un second matériau présentant une surface incurvée et ayant une pluralité de portions successives, lesdites portions du premier matériau étant aptes à venir en contact avec lesdites portions du second matériau dans des zones de contact successives,
- on met en contact quasi-statique l'une des portions successives du premier matériau contre l'une des portions successives du second matériau dans une des zones de contact,
- on applique une charge sur le second matériau en autorisant un déplacement du second matériau en fonction de la dégradation du premier matériau d'une première zone de contact vers une deuxième zone de contact adjacente, la surface incurvée du second matériau ayant une forme permettant que la résultante des forces appliquées par le second matériau au premier matériau fasse un angle sensiblement constant avec ledit premier matériau dans chacune des zones de contact.

Ce procédé et, en particulier le dispositif, permettent d'apporter des éléments de réponse sur les problèmes de durabilité des matériaux et/ou revêtements, par exemple des revêtements de sol (moquette, carrelage, etc.). D'autres applications concernent l'usure des pneumatiques dans les conditions les plus sévères d'utilisation ou la simulation de l'arrachement des granulats et dégradations de la surface d'un matériau, en particulier des revêtements routiers.

En effet, le phénomène de dégradation de surface des revêtements routiers se caractérise généralement par un arrachement de granulats à la surface des revêtements, après applications répétées ou non d'une sollicitation due au passage d'une charge lourde dans des conditions particulières. L'apparition ou non de cette dégradation dépend d'un grand nombre de facteurs liés aux caractéristiques du pneumatique en présence (pression de gonflage, charge appliquée, caractéristique de la gomme, etc.) et du revêtement (état de surface, compacité, adhésion liant - granulats en particulier dans le cas d'un revêtement bitumineux, granulométrie et nature du liant, etc.) et des conditions environnementales (température; eau, gel, produits divers, etc.).

Depuis une dizaine d'années, les gestionnaires routiers ont constaté sur plusieurs tronçons du réseau routier, un endommagement de surface qui se traduit par un arrachement de granulats à la surface de la couche de roulement. Cette dégradation de revêtement survient en particulier durant les premières années de la mise en service. Les zones concernées par ce problème ne sont pas des cas isolés, mais potentiellement les surfaces du réseau routier qui peuvent être soumises à des efforts tangentiels, en particulier lors des manoeuvres de conducteurs de véhicules, tels que lors des phases de freinage, accélération, changement de direction par exemple dans un virage ou giratoire, etc.... Ce phénomène est d'autant plus accentué que la charge appliquée est importante (cas des poids lourds notamment).

Ainsi, on recense des points particuliers du réseau routier au niveau des giratoires, des bretelles d'accès ou de sortie d'autoroute par exemple, de virages, des aires de chargement et de déchargement des poids lourds, en particulier dans les zones aéroportuaires, sans oublier les zones de manoeuvres des avions dans les aéroports, etc.

L'invention permet ainsi de définir les meilleures conditions d'études en laboratoire pour caractériser de façon pertinente la résistance aux efforts tangentiels quasi-statiques de matériaux utilisés dans une optique de classements des produits industriels proposés sur le marché (comme les pneumatiques, les revêtements routiers, les revêtements de sol tels que carrelage, moquette, etc.) et de recherche d'un produit innovant, pouvant avoir une durée de vie plus importante que les produits standards.

L'invention sera bien comprise et ses avantages apparaîtront mieux à la lecture de la description détaillée qui suit, d'un mode de réalisation de l'invention représenté à titre d'exemple non limitatif.

La description se réfère aux dessins annexés sur lesquels :
- la figure 1 représente une vue en coupe d'un dispositif selon l'invention,
- la figure 2A représente une vue en perspective de dessous du patin de la figure 1,
- la figure 2B représente une vue en perspective éclatée du dispositif de la figure 1,
- la figure 3 représente une vue du patin du dispositif selon l'invention,
- la figure 4A représente une vue en coupe du dispositif lorsque le patin est dans une position haute,
- la figure 4B représente une vue en coupe du dispositif lorsque le patin est dans une position intermédiaire, et
- la figure 4C représente une vue en coupe du dispositif lorsque le patin est dans une position basse.

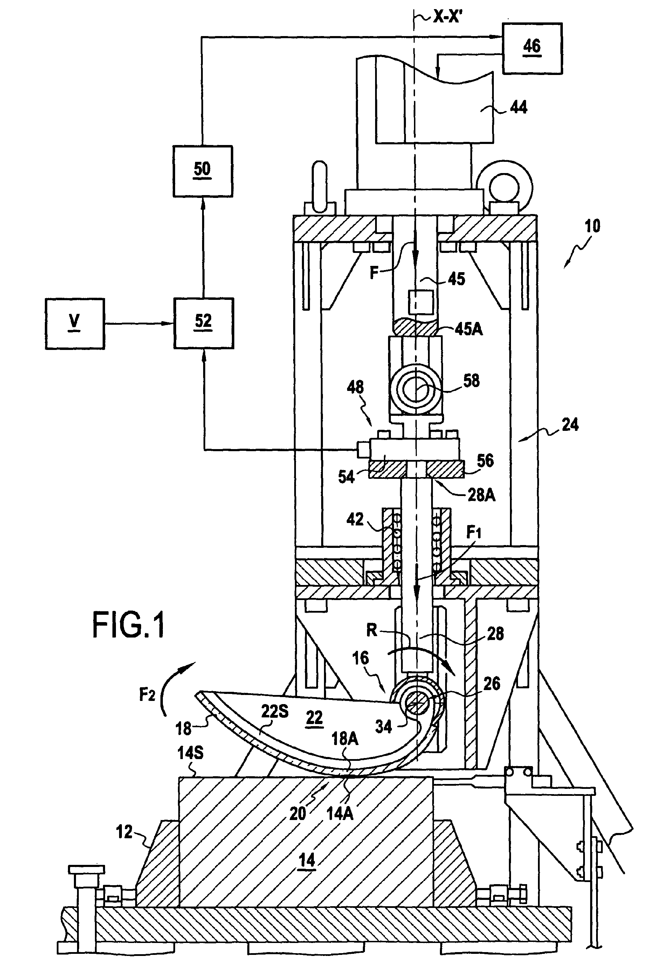

La figure 1 représente un dispositif 10 selon l'invention comportant des premiers moyens formant support 12 pour un premier matériau 14 et des seconds moyens formant support 16 pour un second matériau 18. Les moyens formant support sont disposés de manière qu'au moins une portion 18A du second matériau 18 est en contact quasi-statique avec au moins une portion 14A du premier matériau 14 dans une zone de contact 20.

En l'espèce, les premiers moyens formant support 12 sont fixes, tandis que les seconds moyens formant support 16 sont mobiles. Les seconds moyens formant support 16 comportent un patin 22 qui est recouvert au moins en partie par le second matériau 18. Ainsi, le premier matériau 14 est fixe, alors que le second matériau 18 est mobile.

En fait, le premier matériau 14 présente préférentiellement une surface plane 14S contre laquelle le second matériau 18 vient en contact.

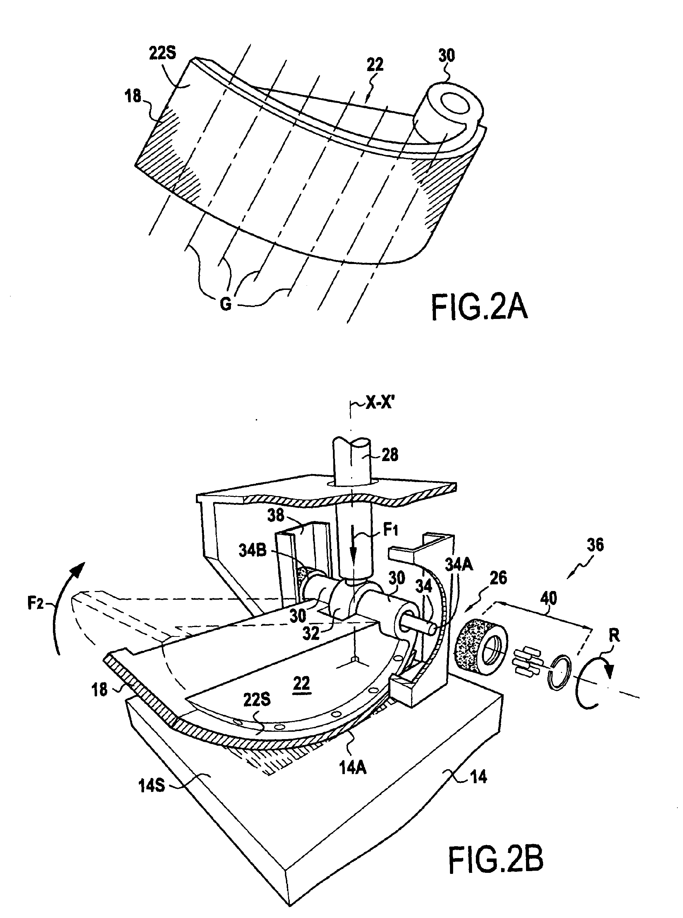

Le patin 22 présente une surface cylindrique dont une partie des génératrices G s'appuie une spirale logarithmique, tel qu'illustré sur la figure 2A.

En l'espèce, comme représenté sur la figure 2B, le patin 22 présente une portion de surface 22S qui est en regard de la surface 14S du premier matériau 14 et qui a la forme d'une portion de spirale logarithmique.

Le dispositif comporte en outre des moyens de chargement 24 qui permettent d'appliquer une charge F de manière quasi-statique dans la zone de contact 20 entre le second matériau 18 et le premier matériau 14.

Afin de pouvoir permettre le déplacement automatique, d'une zone de contact à la zone de contact suivante, du second matériau 18 contre la surface 14S du premier matériau 14, dès que la zone de contact 20 est endommagée, les moyens de chargement 24 autorisent ce déplacement. En l'espèce, les moyens de chargement comportent une liaison pivot 26 et un axe coulissant linéairement 28. La liaison pivot 26 est reliée audit axe coulissant 28 et aux seconds moyens formant support 16. En fait, le patin 22 présente deux logements 30 en forme de fourche et l'axe coulissant 28 présente un oeillet 32, ledit patin 22 et l'axe coulissant 28 pouvant être assemblés en chape à l'aide de l'axe 34 de la liaison pivot 26.

Ainsi, l'axe coulissant 28 est apte à se déplacer linéairement selon la direction indiquée par la flèche F₁, du fait que le patin 22 est libre en rotation autour de l'axe 34 du pivot, le patin 22 va pouvoir basculer contre la surface 14S du premier matériau 14, selon la direction indiquée par la flèche F₂.

On comprend que le contact entre les premier et second matériaux se déplace ainsi successivement de zone de contact en zone de contact adjacente, puisque le patin 22 est libre de basculer autour de l'axe 34 du pivot 26. Lors de ce déplacement, le patin 22 peut chasser de la zone de contact 20, les éventuels débris générés par l'usure des matériaux en présence et ainsi éviter la création d'un troisième corps.

L'axe coulissant 28 se déplace préférentiellement selon une direction de coulissement X-X' qui est sensiblement orthogonale au plan contenant la zone de contact 20. En l'espèce, la direction de coulissement X-X' est sensiblement orthogonale à la surface 14S du premier matériau 14. Les génératrices G du patin 22 étant parallèles entre-elles et parallèles au plan contenant la zone de contact 20, elles sont de ce fait perpendiculaire à la direction de coulissement X-X'.

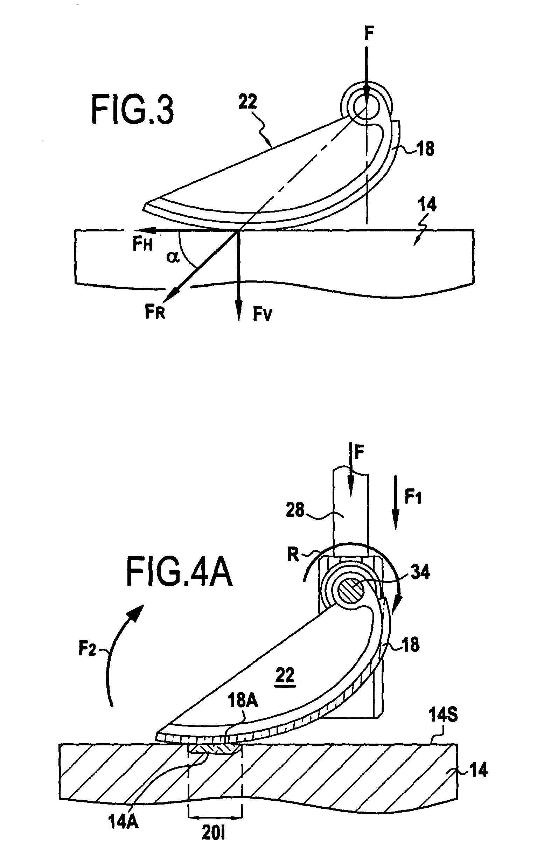

Ainsi, dès lors qu'on applique une charge F sur l'axe 34 du pivot 26 par l'intermédiaire de l'axe coulissant 28, des forces verticales F_{V} et horizontales F_{H} sont générées dans la zone de contact 20, comme mieux illustré sur la figure 3.

L'angle α correspondant à l'angle d'inclinaison de la force résultante F_{R} des forces verticales F_{V} et horizontales F_{H}, par rapport à la surface 14S, est sensiblement constant et sensiblement égal à l'angle définissant la spirale logarithmique du patin 22. En outre, les débris étant chassés lors du déplacement du patin 22, ils ne peuvent pas entraîner de perturbation dans l'application des efforts sur le premier matériau.

Afin de garantir un bon guidage de l'axe coulissant 28 et du patin 22, en référence à la figure 2B, le dispositif comporte en outre des moyens de guidage 36 qui permettent de guider les moyens de chargement 24.

A cet effet, les moyens de guidage 36 comportent deux rails 38 sensiblement parallèles entre eux et sensiblement parallèles à la direction de coulissement X-X', qui coopèrent avec l'axe coulissant 28. En l'espèce, chacune des deux extrémités libres 34A et 34B de l'axe 34 de la liaison pivot 26 est pourvue d'un galet 40 apte à se déplacer linéairement en roulant dans le rail 38 correspondant, parallèlement à la direction de l'axe coulissant 28, c'est-à-dire selon la flèche F₁.

Nous allons à présent décrire les moyens qui permettent de générer le déplacement linéaire de l'axe coulissant 28.

En revenant à la figure 1, le dispositif comporte un palier 42 au travers duquel l'axe coulissant 28 est apte à coulisser linéairement et des moyens d'application d'une charge sur ledit axe coulissant. En l'espèce, l'axe coulissant 28 est relié à un vérin 44 de type connu, par exemple hydraulique.

De préférence, les moyens de chargement 24 comportent en outre un unique organe moteur 46, relié au vérin 44.

Afin de permettre un asservissement en charge du dispositif, il peut être prévu des moyens de mesure 48 de la charge appliquée au premier matériau et des moyens d'asservissement 50 reliés à l'organe moteur 46. La mesure de la charge F appliquée au premier matériau 14 peut être comparée, de préférence à l'aide de moyens de comparaison 52, à une valeur seuil V indiquée par exemple par l'utilisateur ou une banque de données en fonction du couple de matériaux testés, des conditions mécaniques à simuler, etc.

En fonction de l'écart calculé entre la charge F appliquée au premier matériau 14 et la valeur seuil V, les moyens d'asservissement 50 peuvent commander l'organe moteur 46 relié au vérin 44.

Les moyens de mesure de la charge 48 peuvent comporter des jauges directement appliquées sur l'axe coulissant 28 ou bien, tel qu'illustré sur la figure 1, ils peuvent comporter un capteur de charge 54. Dans ce cas, l'axe coulissant 28 n'est pas directement relié à la tige 45 du vérin 44. En effet, l'extrémité libre 28A de l'axe coulissant 28 est alors reliée à un support de capteur de charge 56, tandis que l'extrémité libre 45A de la tige 45 du vérin 44 présente un embout rotule 58 pour vérin.

L'application de la charge s'effectue alors par l'intermédiaire de l'embout rotule 58 qui appuie sur l'axe coulissant 28 par l'intermédiaire du support de capteur de charge 56. Le capteur de charge 54 est préférentiellement disposé entre l'embout rotule 58 et le support de capteur de charge 56.

En référence aux figures 4A à 4C, le patin 22 est illustré dans ses deux positions extrêmes, et une position intermédiaire, respectivement en position haute, en une position intermédiaire et en position basse de l'axe coulissant 28.

Au début du procédé, le patin 22 est en contact dans une première zone de contact 20i, correspondant à la position haute de l'axe coulissant 28. La charge F est appliquée comme précité de manière quasi-statique. On comprend qu'en présence de matériaux déformables une légère oscillation peut être observée dans la zone de contact. Cette oscillation est possible par le fait que le patin 22 peut pivoter librement autour de l'axe 34 et que l'axe coulissant 28 peut osciller librement linéairement.

En appliquant préférentiellement la force F de manière cyclique et sans changement de signe dans la zone de contact, la sollicitation reste unidirectionnelle, les contraintes appliquées dans la zone de contact ont une composante tangentielle et des phénomènes tribologiques vont apparaître entre les deux matériaux.

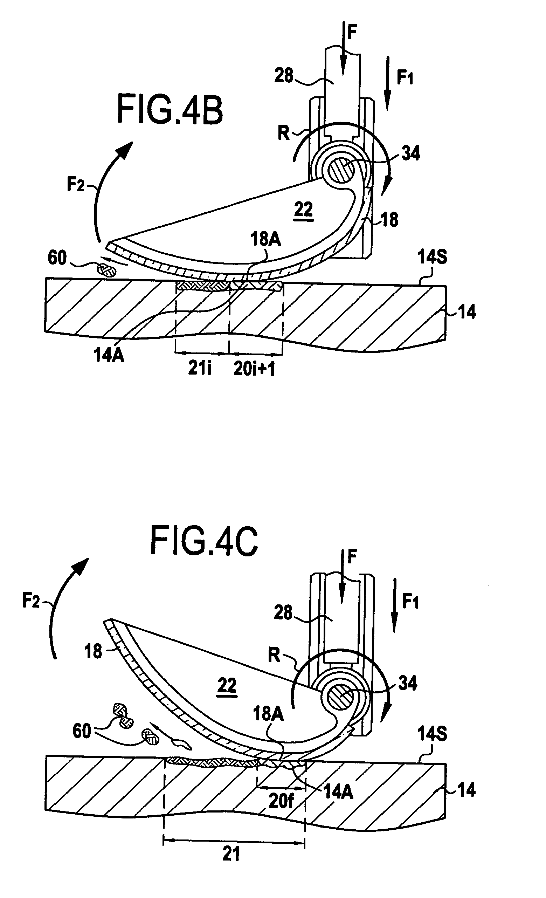

Dès que la première zone de contact est endommagée, le patin 22 étant libre en rotation et l'axe coulissant 28 libre en translation, il s'ensuit que le second matériau 18 se déplace de cette première zone de contact 20i, illustrée sur la figure 4A, vers une deuxième zone de contact 20i+1, illustrée sur la figure 4B.

Le patin 22 pivote de ce fait légèrement dans le sens de la flèche R, et l'axe coulissant 28 est alors légèrement abaissé selon la direction donnée par la flèche F₁. Il s'ensuit que le contact entre le second matériau 18 et le premier matériau 14 se déplace, quittant la première zone de contact 20i, qui présente alors une zone d'usure 21i, vers la deuxième zone de contact 20i+1 non encore endommagée, comme illustrée sur la figure 4B.

Dans cette nouvelle zone de contact 20i+1, l'angle α est à nouveau sensiblement constant avec le premier matériau 14 et le second matériau 18. Le contact entre les deux matériaux reste dans cette deuxième zone 20i+1, tant que cette dernière n'est pas endommagée. Dès que cette dernière est endommagée, le patin 22 glisse vers la zone de contact suivante et ainsi de suite, successivement jusqu'à atteindre la zone de contact 20f, illustrée sur la figure 4C.

Dans cette zone de contact 20f, correspondant à la position basse de l'axe coulissant 28, ce dernier est en fin de course et le patin 22 est arrivé dans sa position extrême. La zone d'usure 21 s'étale alors depuis la zone de contact initiale 20i à la zone finale 20f.

En autorisant librement un tel mouvement, le patin 22 et en particulier le second matériau 18 vient s'écraser contre le premier matériau 14 dans une zone de contact 20 qui se déplace de gauche à droite en allant de la figure 4A à 4C, tant que l'axe 28 peut se déplacer librement vers le bas. Les portions 14A et 18A des premier et second matériaux se déplaçant elles aussi dans la même direction.

La forme incurvée du patin 22 et en particulier lorsqu'il présente un contour logarithmique, permet de chasser vers l'extérieur de la zone de contact, les débris 60 qui pourraient être provoqués par l'arrachement de granulats, en particulier à partir du matériau 14.

La simulation de phénomènes tribologiques entre un premier et un second matériau en contact dynamique dans la zone de contact 20, peut être obtenu en réalisant le procédé suivant, en particulier à l'aide du dispositif précité.

On fournit un premier matériau 14 et un deuxième matériau 18 qui sont mis en contact l'un contre l'autre dans la zone de contact 20. En l'espèce, le second matériau 18 présente une surface incurvée, en étant de préférence maintenu contre le patin 22 précédemment décrit.

On applique préférentiellement la force F de manière cyclique dans un rapport constant et sans changement de signe dans la zone de contact, la sollicitation est unidirectionnelle et les contraintes appliquées dans la zone de contact ont une composante tangentielle. Dès lors, des phénomènes tribologiques vont apparaître entre les deux matériaux.

La forme du patin, associée aux déplacements libres du patin et de l'axe coulissant, permet d'avoir une résultante des forces appliquées par le second matériau 18 au premier matériau 14 qui fasse un angle α sensiblement constant avec ledit premier matériau 14 dans la zone de contact 20.

Ce procédé permet d'approfondir les connaissances sur les mécanismes tribologiques des matériaux sollicités par des actions tangentielles répétées en permettent en particulier de simuler des phénomènes de dégradation de surface, voire d'arrachement des granulats à la surface de revêtements, en particulier de revêtements routiers.

En choisissant un premier matériau tel qu'un enrobé bitumineux et un second matériau de type gomme réticulée, ayant en particulier des caractéristiques physiques proches de celles d'un pneumatique, le procédé selon l'invention permet de simuler, en particulier en laboratoire, la dégradation de surface d'un revêtement routier.

Le procédé peut éventuellement être réitéré en enlevant l'application de la charge F, en soulevant le patin 22 pour le séparer du premier matériau 14 en remontant l'axe coulissant 28 dans sa position haute, puis en appliquant à nouveau la charge F. Le patin 22 est alors à nouveau dans une position correspondant à celle illustrée sur la figure 4A et peut se déplacer librement et successivement jusqu'à son autre position extrême correspondant, à celle illustrée sur la figure 4C, se déplaçant ainsi d'une zone de contact à la zone de contact successive, et ainsi de suite.

## Revendications

1. Dispositif d'obtention de la dégradation d'un premier matériau (14) en contact avec un second matériau (18),
**caractérisé en ce qu'**il comporte des premiers moyens formant support (12) pour un premier matériau (14) ayant une pluralité de portions successives (14A) et des seconds moyens formant support (16) pour un second matériau (18) ayant une pluralité de portions successives (18A), lesdites portions (14A) du premier matériau (14) étant aptes à venir en contact quasi-statique avec lesdites portions (18A) du second matériau (18) dans des zones de contact (20) successives, comportant un patin incurvé (22) recouvert au moins en partie dudit second matériau (18), et
**en ce qu'**il comporte des moyens de chargement (24) des seconds moyens formant support (16), qui autorisent un déplacement des seconds moyens formant support (16) en fonction de la dégradation du premier matériau (14) d'une première zone de contact (20) vers une deuxième zone de contact adjacente (20), la forme du patin (22) permettant que la résultante des forces appliquées par le patin (22) au premier matériau (14) fasse un angle (α) sensiblement constant avec ledit premier matériau (14) dans chacune des zones de contact (20).

2. Dispositif selon la revendication précédente, **caractérisé en ce que** les moyens de chargement (24) des seconds moyens formant support (16) sont reliés à un unique organe moteur (46).
et **en ce que**

3. Dispositif selon l'une quelconque des revendications précédentes, **caractérisé en ce que** le patin (22) présente une surface cylindrique dont une partie des génératrices (G) s'appuie sur une spirale logarithmique.

4. Dispositif selon l'une quelconque des revendications précédentes, **caractérisé en ce que** les premiers moyens formant support (12) sont fixes et **en ce que** les moyens de chargement (24) comportent une liaison pivot (26) et un axe coulissant linéairement (28), ladite liaison pivot (26) étant reliée audit axe coulissant (28) et aux seconds moyens formant support (16).

5. Dispositif selon la revendication précédente, **caractérisé en ce que** l'axe coulissant (28) peut se déplacer selon une direction de coulissement (X-X') qui est sensiblement orthogonale à la zone de contact (20).

6. Dispositif selon l'une quelconque des revendications précédentes, **caractérisé en ce qu'**il comporte en outre des moyens de guidage (36) des moyens de chargement (24).

7. Dispositif selon les revendications 5 et 6 et l'une des revendications précédentes, **caractérisé en ce que** les moyens de guidage (36) comportent deux rails (38) parallèles à la direction de coulissement (X-X') qui coopèrent avec ledit axe coulissant (28).

8. Dispositif selon la revendication 2 et l'une quelconque des revendications précédentes, **caractérisé en ce qu'**il comporte en outre des moyens de mesure (48) de la charge appliquée au premier matériau (14) et des moyens d'asservissement (50) de l'organe moteur (46) en fonction de la valeur mesurée de la charge appliquée au premier matériau (14).

9. Procédé pour provoquer une dégradation d'un premier matériau en contact avec un second matériau dans une zone de contact, **caractérisé en ce que :**
- on fournit un premier matériau (14) ayant une pluralité de portions successives (14A) et un second matériau (18) présentant une surface incurvée et ayant une pluralité de portions successives (18A), lesdites portions (14A) du premier matériau étant aptes à venir en contact avec lesdites portions (18A) du second matériau (18) dans des zones de contact (20) successives,
- on met en contact quasi-statique l'une des portions successives (14A) du premier matériau (14) contre l'une des portions successives (18A) du second matériau (18) dans une des zones de contact (20),
- on applique une charge sur le second matériau (18) en autorisant un déplacement du second matériau (18) en fonction de la dégradation du premier matériau (14) d'une première zone de contact (20) vers une deuxième zone de contact adjacente (20), la surface incurvée du second matériau ayant une forme permettant que la résultante des forces appliquées par le second matériau (18) au premier matériau (14) fasse un angle (α) sensiblement constant avec ledit premier matériau (14) dans chacune des zones de contact (20).

10. Procédé selon la revendication précédente, **caractérisé en ce qu'**on applique une charge de manière cyclique sur le second matériau (18).

11. Procédé selon la revendication 9 ou 10, **caractérisé en ce que** le premier matériau (14) est un enrobé bitumineux et le second matériau (18) est une gomme réticulée.

## Claims

1. A device to effect the degradation of a first material (14) in contact with a second material (18),
**characterised in that** it includes first means forming support (12) for a first material (14), with a plurality of successive portions (14A), and second means forming support (16) for a second material (18), also with a plurality of successive portions (18A), where said portions (14A) of the first material (14) are designed to come into quasi-static contact with said portions (18A) of the second material (18), in successive contact zones (20), which include a curved shoe (22) that is at least partially covered with the said second material (18), and
**in that** it includes means for loading (24) the second support-forming means (16), which allow movement of the second support-forming means (16) according to the degradation of the first material (14) from a first contact zone (20) to a second adjacent contact zone (20), where the shape of the shoe (22) means that the resultant of the forces applied by the shoe (22) to the first material (14) makes a more-or-less constant angle (α) with the said first material (14) in each of the contact zones (20).

2. A device according the preceding claim, **characterised in that** the means for loading (24) the second support-forming means (16) are coupled to a single driving device (46).

3. A device according to any of the preceding claims, **characterised in that** the shoe (22) has a cylindrical surface part, the outline (G) of which is based upon a logarithmic spiral.

4. A device according to any of the preceding claims, **characterised in that** the first support-forming means (12) are fixed, and **in that** the loading means (24) include a pivot link (26) and a linearly sliding shaft (28), with the said pivot link (26) being coupled to the said sliding shaft (28) and to the second support-forming means (16).

5. A device according the preceding claim, **characterised in that** the sliding shaft (28) is able to move along a sliding direction (X-X') that is more-or-less orthogonal to the contact zone (20).

6. A device according to any of the preceding claims, **characterised in that** it also includes means (36) for guiding the loading means (24).

7. A device according to claims 5 and 6 and one of the preceding claims, **characterised in that** the guidance means (36) include two rails (38) parallel to the sliding direction (X-X') that fit onto the said sliding shaft (28).

8. A device according to claim (2) and any of the preceding claims, **characterised in that** it further includes means (48) for measuring the load applied to the first material (14), and means for controlling (50) the drive device (46) according to the measured value of the load applied to the first material (14).

9. A method to give rise to the degradation of a first material that is in contact with a second material in a contact zone, **characterised in that:**
- a first material (14) is provided having a plurality of successive portions (14A), and a second material (18) that has an curved surface and also with a plurality of successive portions (18A), where the said portions (14A) of the first material are designed to come into contact with the said portions (18A) of the second material (18) in successive contact zones (20),
- one of the successive portions (14A) of the first material (14) is brought into quasi-static contact up against one of the successive portions (18A) of the second material (18) in one of the contact zones (20),
- a load is applied to the second material (18) while allowing movement of the second material (18) according to the degradation of the first material (14), from a first contact zone (20) to a second adjacent contact zone (20), where the curved surface of the second material has a shape which determines that the resultant of the forces applied by the second material (18) to the first material (14) makes a more-or-less constant angle (α) with the said first material (14) in each of the contact zones (20).

10. A method according the preceding claim, **characterised in that** a load is applied to the second material (18) in a cyclic manner.

11. A method according to claim 9 or 10, **characterised in that** the first material (14) is a bituminous coating and the second material (18) is a reticulated gum.

## Patentansprüche

1. Vorrichtung zum Erzielen der Schädigung eines mit einem zweiten Material (18) in Kontakt befindlichen ersten Materials (14), **dadurch gekennzeichnet, daß** sie folgendes umfaßt, nämlich erste Mittel (12), die einen Halter für ein eine Vielzahl von aufeinanderfolgenden Abschnitten (14A) aufweisendes erstes Material (14) bilden, sowie zweite Mittel (16), die einen Halter für ein eine Vielzahl von aufeinanderfolgenden Abschnitten (18A) aufweisendes zweites Material (18) bilden, wobei die Abschnitte (14A) des ersten Materials (14) geeignet sind, mit den Abschnitten (18A) des zweiten Materials (18) in aufeinanderfolgenden Kontaktbereichen (20) in quasi-statischen Kontakt zu gelangen, und die eine gekrümmte Kufe (22) umfassen, die wenigstens teilweise mit dem zweiten Material (18) überzogen ist, und daß sie Mittel (24) zum Belasten der einen Halter bildenden zweiten Mittel (16) umfaßt, die in Abhängigkeit der Schädigung des ersten Materials (14) eine Bewegung der einen Halter bildenden zweiten Mittel (16) von einem ersten Kontaktbereich (20) in Richtung eines benachbarten zweiten Kontaktbereichs (20) zulassen, wobei die Form der Kufe (22) ermöglicht, daß die Resultierende der durch die Kufe (22) an das erste Material (14) angelegten Kräfte in jedem der Kontaktbereiche (20) einen im wesentlichen konstanten Winkel (α) mit dem ersten Material (14) bildet.

2. Vorrichtung nach dem vorhergehenden Anspruch, **dadurch gekennzeichnet, daß** die Mittel (24) zum Belasten der einen Halter bildenden zweiten Mittel (16) mit einem einzigen Antriebsorgan (46) verbunden sind.

3. Vorrichtung nach einem der vorhergehenden Ansprüche, **dadurch gekennzeichnet, daß** die Kufe (22) eine zylindrische Oberfläche aufweist, von welcher ein Teil der Mantellinien (G) an einer logarithmischen Spirale anliegt.

4. Vorrichtung nach einem der vorhergehenden Ansprüche, **dadurch gekennzeichnet, daß** die einen Halter bildenden ersten Mittel (12) fest sind und daß die Belastungsmittel (24) ein Drehgelenk (26) sowie eine linear verschiebliche Achse (28) umfassen, wobei das Drehgelenk (26) mit der Schiebeachse (28) und mit den einen Halter bildenden zweiten Mitteln (16) verbunden ist.

5. Vorrichtung nach dem vorhergehenden Anspruch, **dadurch gekennzeichnet, daß** sich die Schiebeachse (28) in einer Verschieberichtung (X-X') bewegen kann, die im wesentlichen orthogonal zum Kontaktbereich (20) verläuft.

6. Vorrichtung nach einem der vorhergehenden Ansprüche, **dadurch gekennzeichnet, daß** sie ferner Mittel (36) zum Führen der Belastungsmittel (24) umfaßt.

7. Vorrichtung nach den Ansprüchen 5 und 6 sowie einem der vorhergehenden Ansprüche, **dadurch gekennzeichnet, daß** die Führungsmittel (36) zwei zur Verschieberichtung (X-X') parallel verlaufende Schienen (38) umfassen, die mit der Verschiebeachse (28) zusammenwirken.

8. Vorrichtung nach Anspruch 2 und nach einem der vorhergehenden Ansprüche, **dadurch gekennzeichnet, daß** sie ferner Mittel (48) zum Messen der an das erste Material (14) angelegten Last, sowie Mittel (50) zum Regeln des Antriebsorgans (46) in Abhängigkeit des gemessenen Wertes der an das erste Material (14) angelegten Last aufweist.

9. Verfahren zum Herbeiführen einer Schädigung eines ersten Materials, das in einem Kontaktbereich mit einem zweiten Material in Kontakt ist, **dadurch gekennzeichnet, daß:**
- ein erstes Material (14) mit einer Vielzahl von aufeinanderfolgenden Abschnitten (14A) und ein zweites Material (18) mit einer gekrümmten Oberfläche und einer Vielzahl von aufeinanderfolgenden Abschnitten (18A) bereitgestellt wird, wobei die Abschnitte (14A) des ersten Materials geeignet sind, mit den Abschnitten (18A) des zweiten Materials (18) in aufeinanderfolgenden Kontaktbereichen (20) in Kontakt zu gelangen,
- einer der aufeinanderfolgenden Abschnitte (14A) des ersten Materials (14) mit einem der aufeinanderfolgenden Abschnitte (18A) des zweiten Materials (18) in einem der Kontaktbereiche (20) in quasi-statischen Kontakt gebracht wird,
- an das zweite Material (18) eine Last **dadurch** angelegt wird, daß in Abhängigkeit der Schädigung des ersten Materials (14) eine Bewegung des zweiten Materials (18) von einem ersten Kontaktbereich (20) in Richtung eines benachbarten zweiten Kontaktbereichs (20) zugelassen wird, wobei die gekrümmte Oberfläche des zweiten Materials eine Form aufweist, die ermöglicht, daß die Resultierende der durch das zweite Material (18) an das erste Material (14) angelegten Kräfte in jedem der Kontaktbereiche (20) einen im wesentlichen konstanten Winkel (α) mit dem ersten Material (14) bildet.

10. Verfahren nach dem vorhergehenden Anspruch, **dadurch gekennzeichnet, daß** eine Last zyklisch an das zweite Material (18) angelegt wird.

11. Verfahren nach Anspruch 9 oder 10, **dadurch gekennzeichnet, daß** das erste Material (14) eine Asphaltdecke und das zweite Material (18) ein vernetzter Gummi ist.
